# EUROPÄISCHE PATENTSCHRIFT

(11) **EP 3 161 421 B1**
(45) Veröffentlichungstag und Bekanntmachung des Hinweises auf die Patenterteilung: **29.01.2020**
(21) Anmeldenummer: 15731905.4
(22) Anmeldetag: 24.06.2015
(51) Int. Cl.: G01D 11/24, B29L 31/34, B29L 31/00, B29C 65/08, B29C 65/16, B29C 65/02, B29C 65/00

(54) **SENSORMODUL UND VERFAHREN ZUM HERSTELLEN EINES SENSORMODULS**
SENSOR MODULE AND METHOD FOR PRODUCING THE SENSOR MODULE
MODULE DE CAPTEUR ET PROCÉDÉ DE FABRICATION DU MODULE DE CAPTEUR

(30) Priorität: 26.06.2014 DE 102014212296
(43) Veröffentlichungstag der Anmeldung: 03.05.2017
(73) Patentinhaber: Vitesco Technologies Germany GmbH, 30165 Hannover (DE)
(72) Erfinder: HENNIGER, Jürgen, 91056 Erlangen-Dechsendorf (DE); KEUTEN, Matthias, 90518 Altdorf (DE); WIECZOREK, Matthias, 91233 Neunkirchen am Sand (DE)
(74) Vertreter: Waldmann, Georg Alexander
(86) Internationale Anmeldenummer: PCT/EP2015/064289
(87) Internationale Veröffentlichungsnummer: WO 2015/197713

(56) Entgegenhaltungen:
- EP-A2- 2 034 276
- WO-A1-2011/077846
- WO-A2-03/004211
- DE-A1-102011 121 818

## Beschreibung

Die Erfindung betrifft ein Sensormodul und ein Verfahren zum Herstellen eines Sensormoduls.

In Leistung bereitstellenden oder übertragenden Einrichtungen in Kraftfahrzeugen sind neben mechanischen Elementen üblicherweise auch elektronische Bauteile enthalten, beispielsweise Sensoren. In Verbrennungsmotoren und Getrieben werden bevorzugt gekapselte Sensoren eingesetzt, welche berührungslos beispielsweise Drehzahlen von Wellen oder anderen Maschinenelementen messen können. Die Kapselung erfolgt durch vollständiges Umschließen des Sensors mit einem Material, welches dazu geeignet ist, den Sensor ausreichend vor den Umgebungsbedingungen in der betreffenden Einrichtung zu schützen. Der gekapselte Sensor muss anschließend in einer genau vorbestimmten Position befestigt werden.

DE 10 2011 121 818 A1 offenbart die Anordnung eines elektronischen Bauteils in einem Gehäuse, welches dazu bestimmt ist, das Bauteil zu schützen. Das Gehäuse wird von einem Gehäusedeckel und einem Gehäuseträger gebildet, wobei das Bauteil auf einer Lasche einer Leiterplatte in dem Gehäuse angeordnet ist und vollständig von einer Dichtfläche umschlossen ist.

DE 10 2008 008 336 A1 offenbart ein Verfahren zur Positionsbestimmung eines abgedeckten Sensorelements einer Sensoranordnung sowie eine Sensoranordnung mit einem entsprechend positionierten Sensorelement.

Die WO 2011/0077846 A1 zeigt ein Sensormodul mit einer Sensoreinheit, einem Sensordeckel und einem separaten Grundkörper, wobei die Sensoreinheit eine Sensorfläche und eine Basisfläche aufweist, wobei der Sensordeckel die Sensorfläche und einen Abschnitt der Basisfläche überdeckt, wobei der Sensordeckel mit dem Grundkörper über eine Schmelzverbindung verbunden ist und wobei der Grundkörper mit der Basisfläche der Sensoreinheit verbunden ist.

Es kann als eine Aufgabe der Erfindung angesehen werden, ein alternatives Sensormodul bereitzustellen, bei dem eine Kapselung möglichst zuverlässig und die Herstellung dennoch möglichst einfach ist und gleichzeitig eine besonders leichte Positionierung und Befestigung des Sensormoduls möglich ist.

Die Aufgabe des Sensormoduls wird gelöst durch ein Sensormodul mit den Merkmalen des unabhängigen Anspruchs 1. Vorteilhafte Ausführungsformen und Weiterbildungen sind den Unteransprüchen und der nachfolgenden Beschreibung zu entnehmen.

Das Sensormodul weist eine Sensoreinheit, einen Sensordeckel und einen separaten Grundkörper auf. Die Sensoreinheit weist eine Sensorfläche und eine Basisfläche auf. Der Sensordeckel überdeckt die Sensorfläche und mindestens einen Abschnitt der Basisfläche. Der Sensordeckel ist mit der Basisfläche über eine Schmelzverbindung verbunden. Der Grundkörper ist zumindest mit der Basisfläche der Sensoreinheit über eine Schmelzverbindung mit einer wählbaren Relativposition zu dem Sensordeckel verbunden.

Die Sensoreinheit ist als eigentlicher Sensor für die Erfassung eines bestimmten Parameters erforderlich. Die Sensoreinheit könnte beispielsweise auf einer Leiterplatte angeordnet sein und mit dieser über Leiterbahnen verbunden sein, die etwa zu einer elektrischen Leitung führen. Zum Anschließen der Sensoreinheit an diese Leitung kann die Sensoreinheit eine Schnittstelle aufweisen, welche flexibel, beispielsweise in Form einer Folie mit Leiterbahnen, oder starr als anschraubbarer Stecker oder einen Stecker aufnehmende Buchse ausgeführt sein. Im Zusammenhang mit der Erfindung ist die Ausführung der Schnittstelle und deren Ort jedoch nicht maßgeblich, solange gewährleistet ist, dass die Sensoreinheit in irgendeiner Weise elektrisch verbindbar ist.

Die Sensorfläche der Sensoreinheit ist als eine effektive Fläche aufzufassen, die bevorzugt direkt an den in der Sensoreinheit integrierten Sensor anschließt und in einem entsprechend geringen und genau bestimmten Abstand an dem zu untersuchenden Maschinenelement zu positionieren ist. Der Sensor in der Sensoreinheit, beispielsweise in Form eines Halbleiters oder eines elektromagnetischen Bauteils, könnte in der Sensoreinheit derart eingebettet sein, dass er möglichst nah an der Sensorfläche endet.

Die Sensorfläche könnte an einem der Basisfläche abgewandten Ende eines Vorsprungs liegen und durch einen haubenförmigen Sensordeckel abdeckbar sein.

Der Sensordeckel ist korrespondierend mit der Sensorfläche ausgestaltet und dazu eingerichtet, die Sensoreinheit vollständig abzudecken und so vor den für den Sensor schädlichen Einflüssen zu schützen.

Zur erleichterten Befestigung der Sensoreinheit an dem Grundkörper und/oder zur erleichterten Befestigung des Sensordeckels an der Sensoreinheit kann die Basisfläche verwendet werden, welche sich lateral nach außen erstreckt und im Wesentlichen eben oder abgestuft ist.

Der Grundkörper ist in diesem Zusammenhang als Träger aufzufassen, der schließlich die gesamte Anordnung aus Sensoreinheit, Sensordeckel und Schnittstelle trägt bzw. an einer übergeordneten Komponente befestigbar ist.

Ein besonderer Vorteil gegenüber bekannten Sensormodulen ist die Tatsache, dass beispielhaft durch die Laserverschweißung eine besonders zuverlässige Kapselung einer Sensoreinheit mit einem Sensordeckel hervorgerufen wird und insbesondere ein bereits gekapselter Sensor durch die erfolgte Verschweißung mit dem Sensordeckel ein integrales Bauteil bildet, welches unmittelbar auch in größeren Baueinheiten einsetzbar und daran verschweißbar ist, ohne eine separate Aufnahme zu erfordern und ohne die Integrität des Sensors bei der Integration des Sensors in eine größere Baueinheit zu beeinträchtigen. Desweiteren können insbesondere in Bauteilen, die fertigungstechnisch vergleichsweise grobe Maßtoleranzen aufweisen, durch die wählbare Relativposition des Grundkörpers und des Sensordeckels sehr leicht Maßabweichungen direkt bei der Integration des Sensormoduls in das Bauteil ausgeglichen werden.

In diesem Zusammenhang ist darauf hinzuweisen, dass eine Schmelzverbindung durch mehrere verschiedene Verfahren bereitstellbar ist. Dies kann insbesondere Laserschweißverfahren und Ultraschallschweißverfahren umfassen. Zum Verschmelzen wird mit Hilfe einer Maske eine ausreichende Flächenpressung zwischen den zu verbindenden Komponenten hervorgerufen. Gleichzeitig kann durch Einwirkung eines dafür geeigneten Laserstrahls oder durch Einwirkung von Schwingungen im Ultraschallbereich eine Verschmelzung der beiden Komponenten durchgeführt werden, bei dem Material des Deckels bereichsweise mit dem Material des Grundkörpers in dem behandelten Bereich verschmilzt. Damit entsteht eine bevorzugt umlaufende Abdichtung des Sensordeckels.

In einer besonders vorteilhaften Ausführungsform ist mindestens eines des Sensordeckels und der Basisfläche, d.h. mindestens einer dieser beiden Verbindungspartner, laser-transparent, so dass durch Einwirken eines für eine Verschweißung geeigneten Laserstrahls auf das jeweils lasertransparente Bauteil ein Wärmeeintrag in der Grenzfläche zwischen dem lasertransparenten Bauteil und einer angrenzenden, nicht lasertransparenten Komponente entsteht, so dass eine stoffschlüssige Schweißverbindung erreicht wird. Beispielsweise kann die Sensoreinheit bereits vollständig gekapselt sein, das heißt mechanisch in einen Sensordeckel eingeführt sein, wonach selbst von einer rückwärtigen Seite aus eine Laserverschweißung durchführbar ist.

In einer besonders vorteilhaften Ausführungsform weist mindestens eines der Basisfläche und des Sensordeckels einen zumindest teilweise umlaufenden Vorsprung auf, wobei der Vorsprung senkrecht zu der Basisfläche verläuft und dazu eingerichtet ist, mit dem Material des Sensordeckels bzw. der Basisfläche zum Herstellen einer Schmelzverbindung zu verschmelzen. Der Vorsprung kann als Feder im Sinne einer Nut- und Feder-Verbindung aufgefasst werden und weist einen bevorzugt recht schmalen Profilquerschnitt auf. Diese Ausgestaltung ist für die Verschmelzung vorteilhaft, wobei eine transparente Maske eine Flächenpressung direkt in der an dem Vorsprung befindlichen Grenzfläche ausübt. Das anliegende Material verschmilzt und führt zu einer besonders guten Abdichtung, so dass eine separat hergestellte und zwischen zwei Komponenten aufgelegte Dichtflächen nicht erforderlich ist. Der Energieeintrag erfolgt räumlich begrenzt auf einer kleinen Fläche und kann so gering gehalten werden.

In einer besonders bevorzugten Ausführungsform ist die Basisfläche lasertransparent und der Sensordeckel ist nicht lasertransparent. Damit kann von rückwärtiger Seite, das heißt auf einer dem Sensordeckel abgewandten Seite der Basisfläche, ein Laser auf die gewünschten Verbindungsstellen zwischen Sensoreinheit und Sensordeckel gerichtet werden, um die Verschweißung durchzuführen. Da der Sensordeckel einen deutlichen Vorsprung, abhängig von der gewählten Sensorfläche, aufweisen kann, eignet sich die Positionierung eines Lasers besonders auf der rückwärtigen Seite der Basisfläche.

In einer weiter bevorzugten Ausführungsform ist der Grundkörper radial von dem Sensordeckel beabstandet, so dass ein Spalt zwischen dem Sensordeckel und dem Grundkörper entsteht, wobei der Grundkörper auf der gleichen Seite der Basisfläche angeordnet ist wie der Sensordeckel. Damit kann in zwei aufeinanderfolgenden Arbeitsschritten quasi ohne Umbau eine Laserverschweißung sowohl des Grundkörpers als auch des Sensordeckels durchgeführt werden. In diesem Falle wäre der Grundkörper ebenfalls nicht lasertransparent.

Selbstverständlich ist auch die umgekehrte Variante möglich, bei der sowohl der Sensordeckel als auch der Grundkörper lasertransparent sind, die Basisfläche jedoch nicht. Eine Verschweißung könnte folglich von einer Seite des Sensormoduls erfolgen, die der Basisfläche entgegengesetzt ist.

Die Aufgabe bezüglich des Verfahrens zum Herstellen eines derartigen Sensormoduls weist insbesondere die Schritte des Bereitstellens einer Sensoreinheit mit einer Sensorfläche und einer Basisfläche, eines Sensordeckels und eines Grundkörpers auf, des Anordnens des Sensordeckels über der Sensoreinheit derart, dass der Sensordeckel die Sensorfläche und mindestens einen Abschnitt der Basisfläche überdeckt, des Verschmelzens des Sensordeckels mit der Basisfläche der Sensoreinheit, des Anordnens des Grundkörpers an der Basisfläche der Sensoreinheit und des Verschmelzens des Grundkörpers zumindest mit der Basisfläche der Sensoreinheit in einer wählbaren Relativposition des Sensordeckels und des Grundkörpers.

Ebenso vorteilhaft weist das Verfahren das Anordnen des Grundkörpers auf der Basisfläche auf der gleichen Seite wie der Sensordeckel und das Verschmelzen des Grundkörpers mit der Basisfläche auf.

Das Verschmelzen kann dabei das Verschweißen durch ein Laserschweißverfahren und das Verschweißen mit Hilfe eines Ultraschallschweißverfahrens umfassen.

Weitere Merkmale, Vorteile und Anwendungsmöglichkeiten der vorliegenden Erfindung ergeben sich aus der nachfolgenden Beschreibung der Ausführungsbeispiele und den Figuren. In den Figuren stehen dabei gleiche Bezugszeichen für gleiche oder ähnliche Objekte.
Fig. 1 zeigt ein erstes Ausführungsbeispiel eines Sensormoduls mit lasertransparentem Sensordeckel und Grundkörper.
Fig. 2 zeigt ein zweites Ausführungsbeispiel eines Sensormoduls mit nicht lasertransparentem Sensordeckel und Grundkörper.

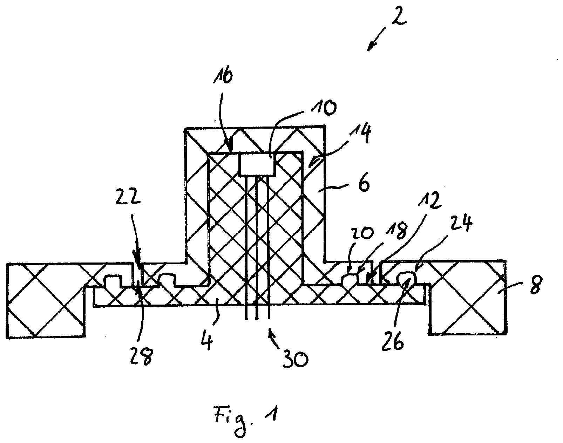

Fig. 1 zeigt ein Sensormodul 2 mit einer Sensoreinheit 4, einem Sensordeckel 6 und einem Grundkörper 8. In diesem Ausführungsbeispiel ist die Sensoreinheit 4 mit einem Sensor 10 ausgestattet, der sich an einer einer Basisfläche 12 abgewandten Seite eines Vorsprungs 14 befindet und in eine Sensorfläche 16 ragt. Die Basisfläche 12 weist vor einem Verschmelzungsvorgang Vorsprünge 18 auf, die das Material des Sensordeckels 6 durchdringen, so dass ein fluiddichter Fügebereich 20 entsteht. Nach dem Abdecken des Vorsprungs 14 schließt eine Art Kragen 22 den Sensordeckel 6 radial außerhalb des Fügebereichs 20 den Sensordeckel 6 ab.

Beispielhaft ist der Sensordeckel 6 aus einem lasertransparenten Material gestaltet, während die Sensoreinheit 4 aus einem nicht lasertransparenten Material besteht. Durch Bestrahlung beispielsweise der Vorsprünge 18 durch den Kragen 22 hindurch entsteht in einer Grenzfläche zwischen den Vorsprüngen 18 und dem Sensordeckel 6 Wärme, die zur stoffschlüssigen Verschmelzung des Sensordeckels 6 mit der Sensoreinheit 4 führt.

Der Grundkörper 8 ist exemplarisch ebenfalls aus einem lasertransparenten Material gestaltet und weist einen Fügebereich 24 auf, in dem ursprünglich vorgesehene Vorsprünge 26 der Sensoreinheit 4 mit dem Material des Grundkörpers 8 verschmelzen. Die Vorsprünge 26 sind radial von den Vorsprüngen 18 beabstandet, weiterhin weist der Grundkörper 8 einen gewissen Abstand zu dem Kragen 22 des Sensordeckels 6 auf, so dass dort ein Spalt 28 für einen Toleranzausgleich entsteht. Der Spalt 28 ist für die Wählbarkeit der Relativposition zwischen dem Grundkörper 8 und dem Sensordeckel 6 verantwortlich, d.h. der Sensordeckel 6 und der Grundkörper 8 können zueinander vor dem Verschmelzungsvorgang verschoben werden.

Sind alle drei Komponenten miteinander verbunden, entsteht ein gekapseltes Sensormodul 2, welches eine Schnittstelle 30 zum Verbinden des Sensors 10 mit einer elektrischen Leitung aufweist. Der Grundkörper 8 kann zur Aufnahme des Sensormoduls 2 verwendet werden.

Statt eines Laserschweißverfahrens kann auch ein Ultraschallschweißverfahren angewandt werden, so dass die Lasertransparenz dafür nicht notwendig ist. Dies gilt sowohl für das Ausführungsbeispiel in Fig. 1 als auch für die nachfolgenden Ausführungsbeispiele.

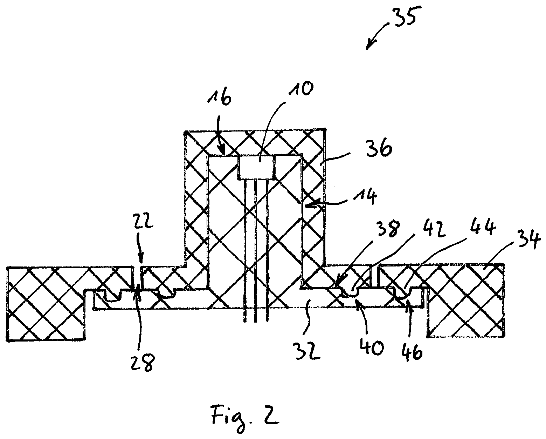

In einer alternativen Ausführungsform, die in Fig. 2 gezeigt wird, ist eine Sensoreinheit 32 vorgesehen, welche aus einem lasertransparenten Material besteht, während ein Grundkörper 34 und ein Sensordeckel 36 jeweils aus einem nicht lasertransparenten Material bestehen. Der grundsätzliche Aufbau ist identisch mit dem in Fig. 1, lediglich beispielhaft weist eine Basisfläche 38 der Sensoreinheit 32 einen Fügebereich 40 auf, in dem ursprünglich an dem Sensordeckel 36 angeordnete Vorsprünge 42 mit dem Material der Basisfläche 38 verschmelzen.

Gleichermaßen weist der Grundkörper 34 einen Fügebereich 44 auf, in dem das Material von Vorsprüngen 46 der Basisfläche 38 mit dem Material des Grundkörpers 34 verschmilzt.

Eine Verschmelzung der drei Bauteile kann durch Bestrahlung mit einem Laser von einer rückwärtigen Position, das heißt einer dem Sensordeckel 36 abgewandten Seite der Basisfläche 38, erfolgen.

## Patentansprüche

1. Sensormodul (2, 35), aufweisend:
- eine Sensoreinheit (4, 32),
- einen Sensordeckel (6, 36), und
- einen separaten Grundkörper (8, 34),
wobei die Sensoreinheit (4, 32) eine Sensorfläche (16) und eine Basisfläche (12, 38) aufweist,
wobei der Sensordeckel (6, 36) die Sensorfläche (16) und mindestens einen Abschnitt der Basisfläche (12, 38) überdeckt,
wobei der Sensordeckel (6, 36) mit der Basisfläche (12, 38) über eine Schmelzverbindung verbunden ist und
wobei der Grundkörper (8, 34) zumindest mit der Basisfläche (12, 38) der Sensoreinheit (4, 32) über eine Schmelzverbindung mit einer wählbaren Relativposition zu dem Sensordeckel (6, 36) verbunden ist.

2. Sensormodul (2, 35) nach Anspruch 1,
wobei mindestens eines des Sensordeckels (6, 36), des Grundkörpers (8, 34) und der Sensoreinheit (4, 32) aus einem lasertransparenten Material besteht, so dass durch Einwirken eines für eine Verschweißung geeigneten Laserstrahls auf das jeweils lasertransparente Bauteil ein Wärmeeintrag in der Grenzfläche zwischen dem lasertransparenten Bauteil und einem angrenzenden, nicht lasertransparenten Bauteil entsteht.

3. Sensormodul (2, 35) nach Anspruch 1 oder 2,
wobei mindestens eines der Basisfläche (12, 38) und des Sensordeckels (6, 36) einen zumindest teilweise umlaufenden Vorsprung (14, 18, 26, 42, 46) aufweist,
wobei der Vorsprung (14, 18, 26, 42, 46) senkrecht zu der Basisfläche (12, 38) verläuft und dazu eingerichtet ist, mit dem Material des Sensordeckels (6, 36) bzw. der Basisfläche (12, 38) zum Herstellen einer Schmelzverbindung zu verschmelzen.

4. Sensormodul (2, 35) nach einem der vorhergehenden Ansprüche,
wobei die Sensoreinheit (4, 32) aus einem lasertransparenten Material und der Sensordeckel (6, 36) und der Grundkörper (8, 34) aus einem nicht lasertransparenten Material bestehen.

5. Sensormodul (2, 35) nach einem der Ansprüche 1 bis 3,
wobei der Sensordeckel (6, 36) und der Grundkörper (8, 34) aus einem lasertransparenten Material bestehen und die Sensoreinheit (4, 32) aus einem nicht lasertransparenten Material besteht.

6. Sensormodul (2, 35) nach einem der vorhergehenden Ansprüche,
wobei der Grundkörper (8, 34) radial von dem Sensordeckel (6, 36) beabstandet ist, so dass ein Spalt (28) zwischen dem Sensordeckel (6, 36) und dem Grundkörper (8, 34) besteht, und
wobei der Grundkörper (8, 34) auf der gleichen Seite der Basisfläche (12, 38) angeordnet ist wie der Sensordeckel (6, 36).

7. Sensormodul (2, 35) nach Anspruch 1,
wobei die Verschmelzung durch ein Ultraschallschweißverfahren hergestellt ist.

8. Verfahren zum Herstellen eines Sensormoduls (2, 35), aufweisend die Schritte:
- Bereitstellen einer Sensoreinheit (4, 32) mit einer Sensorfläche (16) und einer Basisfläche (12, 38), eines Sensordeckels (6, 36) und eines separaten Grundkörpers (8, 34),
- Anordnen des Sensordeckels (6, 36) über der Sensoreinheit (4, 32) derart, dass der Sensordeckel (6, 36) die Sensorfläche (16) und mindestens einen Abschnitt der Basisfläche (12, 38) überdeckt,
- Verschmelzen des Sensordeckels (6, 36) mit der Basisfläche (12, 38) der Sensoreinheit (4, 32),
- Anordnen des Grundkörpers (8, 34) an der Basisfläche (12, 38) der Sensoreinheit (4, 32) und
- Verschmelzen des Grundkörpers (8, 34) zumindest mit der Basisfläche (12, 38) der Sensoreinheit (4, 32) mit einer wählbaren Relativposition zu dem Sensordeckel (6, 36).

9. Verfahren nach Anspruch 8,
ferner aufweisend das Anordnen des Grundkörpers (8, 34) auf der Basisfläche (12, 38) auf der gleichen Seite wie der Sensordeckel und das Verschmelzen des Grundkörpers (8, 34) mit der Basisfläche (12, 38).

10. Verfahren nach einem der Ansprüche 8 bis 9,
wobei das Verschmelzen durch ein Laserschweißverfahren oder durch ein Ultraschallschweißverfahren durchgeführt wird.

## Claims

1. Sensor module (2, 35), having:
- a sensor unit (4, 32),
- a sensor cover (6, 36), and
- a separate main body (8, 34),
the sensor unit (4, 32) having a sensor surface (16) and a base surface (12, 38),
the sensor cover (6, 36) covering the sensor surface (16) and at least a portion of the base surface (12, 38),
the sensor cover (6, 36) being connected to the base surface (12, 38) by way of a fused connection, and
the main body (8, 34) being connected at least to the base surface (12, 38) of the sensor unit (4, 32) by way of a fused connection with a selectable relative position in relation to the sensor cover (6, 36).

2. Sensor module (2, 35) according to Claim 1,
at least one out of the sensor cover (6, 36), the main body (8, 34) and the sensor unit (4, 32) consisting of a material that is laser-transparent, so that action of a laser beam suitable for welding on the respectively laser-transparent component is used to introduce heat in the interface between the component that is laser-transparent and an adjoining component that is not laser-transparent.

3. Sensor module (2, 35) according to Claim 1 or 2,
at least one out of the base surface (12, 38) and the sensor cover (6, 36) having an at least partially peripheral projection (14, 18, 26, 42, 46),
the projection (14, 18, 26, 42, 46) running perpendicularly in relation to the base surface (12, 38) and being designed to fuse with the material of the sensor cover (6, 36) or the base surface (12, 38) to produce a fused connection.

4. Sensor module (2, 35) according to one of the preceding claims,
the sensor unit (4, 32) consisting of a material that is laser-transparent and the sensor cover (6, 36) and the main body (8, 34) consisting of a material that is not laser-transparent.

5. Sensor module (2, 35) according to one of Claims 1 to 3,
the sensor cover (6, 36) and the main body (8, 34) consisting of a material that is laser-transparent and the sensor unit (4, 32) consisting of a material that is not laser-transparent.

6. Sensor module (2, 35) according to one of the preceding claims,
the main body (8, 34) being at a distance radially from the sensor cover (6, 36), so that a gap (28) is produced between the sensor cover (6, 36) and the main body (8, 34), and
the main body (8, 34) being arranged on the same side of the base surface (12, 38) as the sensor cover (6, 36).

7. Sensor module (2, 35) according to Claim 1,
the fusion being produced by an ultrasonic welding method.

8. Method for producing a sensor module (2, 35), comprising the steps of:
- providing a sensor unit (4, 32) having a sensor surface (16) and a base surface (12, 38), a sensor cover (6, 36) and a separate main body (8, 34),
- arranging the sensor cover (6, 36) over the sensor unit (4, 32) in such a way that the sensor cover (6, 36) covers the sensor surface (16) and at least a portion of the base surface (12, 38),
- fusing the sensor cover (6, 36) to the base surface (12, 38) of the sensor unit (4, 32),
- arranging the main body (8, 34) on the base surface (12, 38) of the sensor unit (4, 32) and
- fusing the main body (8, 34) at least to the base surface (12, 38) of the sensor unit (4, 32) with a selectable relative position in relation to the sensor cover (6, 36).

9. Method according to Claim 8,
also comprising arranging the main body (8, 34) on the base surface (12, 38) on the same side as the sensor cover and fusing the main body (8, 34) to the base surface (12, 38).

10. Method according to one of Claims 8 to 9,
the fusing being carried out by a laser welding method or by an ultrasonic welding method.

## Revendications

1. Module de détection (2, 35), comportant :
- une unité de détection (4, 32),
- un couvercle de détecteur (6, 36), et
- un corps de base (8, 34) séparé,
dans lequel l'unité de détection (4, 32) présente une surface de détection (16) et une surface de base (12, 38),
dans lequel le couvercle de détecteur (6, 36) recouvre la surface de détection (16) et au moins une partie de la surface de base (12, 38),
dans lequel le couvercle de détecteur (6, 36) est relié à la surface de base (12, 38) par une liaison par fusion et
dans lequel le corps de base (8, 34) est relié au moins à la surface de base (12, 38) de l'unité de détection (4, 32) par une liaison par fusion en une position relative sélectionnable par rapport au couvercle de détecteur (6, 36).

2. Module de détection (2, 35) selon la revendication 1,
dans lequel au moins l'un du couvercle de détecteur (6, 36), du corps de base (8, 34) et de l'unité de détection (4, 32) est constitué d'un matériau transparent au laser, de manière à ce qu'un apport de chaleur est respectivement produit dans le composant transparent au laser sur la surface de séparation entre le composant transparent au laser et un composant voisin non transparent au laser par action d'un faisceau laser adapté pour un soudage.

3. Module de détection (2, 35) selon la revendication 1 ou 2,
dans lequel au moins l'un de la surface de base (12, 38) et du couvercle de détecteur (6, 36) présente une saillie au moins partiellement circonférentielle (14, 18, 26, 42, 46),
dans lequel la saillie (14, 18, 26, 42, 46) s'étend perpendiculairement à la surface de base (12, 38) et est conçue pour fondre respectivement avec le matériau du couvercle de détecteur (6, 36) ou la surface de base (12, 38) afin de former une liaison par fusion.

4. Module de détection (2, 35) selon l'une des revendications précédentes,
dans lequel l'unité de détection (4, 32) est constituée d'un matériau transparent au laser et le couvercle de détecteur (6, 36) et le corps de base (8, 34) sont constitués d'un matériau non transparent au laser.

5. Module de détection (2, 35) selon l'une des revendications 1 à 3,
dans lequel le couvercle de détecteur (6, 36) et le corps de base (8, 34) sont constitués d'un matériau transparent au laser et l'unité de détection (4, 32) est constituée d'un matériau non transparent au laser.

6. Module de détection (2, 35) selon l'une des revendications précédentes,
dans lequel le corps de base (8, 34) est espacé radialement du couvercle de détecteur (6, 36) de manière à ce qu'il existe un interstice (28) entre le couvercle de détecteur (6, 36) et le corps de base (8, 34), et
dans lequel le corps de base (8, 34) est agencé du même côté de la surface de base (12, 38) que le couvercle de détecteur (6, 36) .

7. Module de détection (2, 35) selon la revendication 1, dans lequel la fusion est produite par un procédé de soudage par ultrasons.

8. Procédé de production d'un module de détection (2, 35), comprenant les étapes suivantes :
- la fourniture d'une unité de détection (4, 32) ayant une surface de détection (16) et une surface de base (12, 38), un couvercle de détecteur (6, 36) et un corps de base (8, 34) séparé,
- l'agencement du couvercle de détecteur (6, 36) au-dessus de l'unité de détection (4, 32) de manière à ce que le couvercle de détecteur (6, 36) recouvre la surface de détecteur (16) et au moins une partie de la surface de base (12, 38),
- la fusion du couvercle de détecteur (6, 36) avec la surface de base (12, 38) de l'unité de détection (4, 32),
- l'agencement du corps de base (8, 34) sur la surface de base (12, 38) de l'unité de détection (4, 32), et
- la fusion du corps de base (8, 34) au moins avec la surface de base (12, 38) de l'unité de détection (4, 32) en une position relative sélectionnable par rapport au couvercle de détecteur (6, 36).

9. Procédé selon la revendication 8,
comprenant en outre l'agencement du corps de base (8, 34) sur la surface de base (12, 38) du même côté que le couvercle de détecteur et la fusion du corps de base (8, 34) avec la surface de base (12, 38).

10. Procédé selon l'une des revendications 8 à 9,
dans lequel la fusion est effectuée par un procédé de soudage au laser ou par un procédé de soudage par ultrasons.
